# EUROPÄISCHE PATENTANMELDUNG

(11) **EP 3 782 522 A2**
(43) Veröffentlichungstag der Anmeldung: **24.02.2021**
(21) Anmeldenummer: 20192514.6
(22) Anmeldetag: 24.08.2020
(51) Int. Cl.: A47K 3/32, A47K 3/38, B60R 15/02, E03F 5/04

(54) **CAMPINGFAHRZEUG UND CAMPINGFAHRZEUGDUSCHKABINE**

(30) Priorität: 23.08.2019 DE 102019122698
(71) Anmelder: Hymer GmbH & Co. KG, 88339 Bad Waldsee (DE)
(72) Erfinder: Sawetzki, Bernhard, 88364 Wolfegg (DE); Hepe, Dominik, 68212 Ravensburg (DE)
(74) Vertreter: Waller, Stefan

(57) **Zusammenfassung**

Die Erfindung betrifft ein Campingfahrzeug (1), welches einen Fahrzeuginnenraum (2) umfasst, wobei der Fahrzeuginnenraum (2) einen Laufboden (3), eine Campingfahrzeugduschkabine (101) und eine Ablaufeinrichtung (4) umfasst. Hierbei umfasst die Ablaufeinrichtung (4) eine in dem Laufboden (3) ausgebildete Rinne (5) und einen Siphon (6), wobei die Rinne (5) einen durch den Laufboden (3) gebildeten Duschboden (7) als Ringrinne (8) ringartig umläuft.

## Beschreibung

Die Erfindung betrifft ein Campingfahrzeug und eine Campingfahrzeugduschkabine gemäß dem Oberbegriff des Anspruchs 1 bzw. 10.

Aus der DE 10 2005 039 255 A1 ist ein Campingfahrzeug bekannt, welches einen Fahrzeuginnenraum umfasst, wobei der Fahrzeuginnenraum einen Laufboden, eine Campingfahrzeugduschkabine und eine Ablaufeinrichtung umfasst.

Es ist Aufgabe der Erfindung, ein Campingfahrzeug und eine Campingfahrzeugduschkabine vorzuschlagen, bei welchem bzw. durch welche eine vielseitige Nutzung des Campingfahrzeugs minimal eingeschränkt ist bzw. welche eine zum Duschen alternative Nutzung eines Campingfahrzeugs erlaubt.

Diese Aufgabe wird ausgehend von den Merkmalen des Oberbegriffs des Anspruchs 1 bzw. 10 durch die kennzeichnenden Merkmale des Anspruchs 1 bzw. 10 gelöst. In den jeweiligen Unteransprüchen sind vorteilhafte und zweckmäßige Weiterbildungen angegeben.

Das erfindungsgemäße Campingfahrzeug umfasst einen Fahrzeuginnenraum, wobei der Fahrzeuginnenraum einen Laufboden, eine Campingfahrzeugduschkabine und eine Ablaufeinrichtung umfasst, wobei die Ablaufeinrichtung eine in dem Laufboden ausgebildete Rinne und einen Siphon umfasst und wobei die Rinne einen durch den Laufboden gebildeten Duschboden als Ringrinne ringartig umläuft. Durch die Ringrinne wird eine Begehbarkeit des Laufbodens nur unwesentlich eingeschränkt, so dass der Laufboden in einem Bereich, in welchem die Campingfahrzeugduschkabine angeordnet ist, bei entfernter Campingfahrzeugduschkabine frei nutzbar ist und somit in allen Zeiträumen, in welchen nicht geduscht wird, zur alternativen Nutzung zur Verfügung steht. Bei einem derartigen Campingfahrzeug liegen der durch die Ringringe umgrenzte Duschboden und ein außerhalb der Ringrinne verlaufender Umgebungsboden auf demselben Niveau. Hierdurch bilden der Duschboden und der Umgebungsboden einen hindernisfreien Laufboden.

Es kann auch vorgesehen sein, dass die Campingfahrzeugduschkabine einen flexiblen Schlauch umfasst und eine durch einen ersten umlaufenden Rand gebildete untere Öffnung und eine durch einen zweiten umlaufenden Rand gebildete obere Offnung umfasst. Ein derartiger Schlauch lässt sich kostengünstig aus einem Endlosschlauch oder aus streifenförmigen Material herstellen.

Weiterhin kann es vorgesehen sein, die Campingfahrzeugduschkabine derart anzuordnen, dass diese mit dem ersten umlaufenden Rand unter eine Laufebene des Laufbodens in die Rinne eintaucht. Hierdurch wird sicher vermieden, dass Spritzwasser und/oder innen an dem Schlauch ablaufendes Wasser den Laufboden außerhalb der Rinne nass macht.

Es kann auch vorgesehen sein, dass der zweite umlaufende Rand der Campingfahrzeugduschkabine wenigstens ein Befestigungsmittel umfasst, wobei die Campingfahrzeugduschkabine mittels des Befestigungsmittels an einer Decke und/oder wenigstens einer Wand des Fahrzeuginnenraums befestigt ist. Hierdurch kann auf eine Ausführung der Campingfahrzeugduschkabine als selbsttragende Konstruktion verzichtet werden, so dass sich diese als Leichtbaukonstruktion verwirklichen lässt.

Weiterhin kann es auch vorgesehen sein, dass der Schlauch zwischen dem ersten Rand und dem zweiten Rand an seiner Mantelfläche eine durch einen Verschluss verschließbare Zutrittsöffnung umfasst. Hierdurch ist es erleichtert, in die Campingfahrzeugduschkabine einzusteigen und aus der Campingfahrzeugduschkabine herauszusteigen. Der Verschluss ist vorzugsweise als Reißverschluss oder als Klettverschluss oder als Magnetverschluss oder als eine Kombination der vorgenannten Verschlussarten ausgebildet.

Es kann auch vorgesehen sein, dass der Schlauch zwischen dem ersten Rand und dem zweiten Rand an seiner Mantelfläche einen Durchgriff zur Betätigung einer Armatur und/oder zur Durchführung einer Handbrause umfasst. Hierdurch ist die Bedienung der Armatur erleichtert, da diese nicht unter Zwischenlage des Schlauches bedient werden muss. Weiterhin kann hierdurch auch der Anschlussschlauch der Handbrause kurz gehalten werden, da dieser nicht von oben in die Campingfahrzeugduschkabine geführt werden muss.

Weiterhin kann es auch vorgesehen sein, dass der erste umlaufende Rand der Campingfahrzeugduschkabine als steifer Rahmen oder als elastisch verformbarer Rahmen ausgebildet ist. Hierdurch wird die Campingfahrzeugduschkabine in einem unteren Bereich stabilisiert und nimmt eine durch den Rahmen vorgegeben Form an.

Es kann auch vorgesehen sein, dass die Rinne und der erste umlaufende Rand der Campingfahrzeugduschkabine mit seinem Rahmen derart in Dimension und Form aufeinander angepasst sind, dass die Campingfahrzeugduschkabine mit ihrem unteren Rand in der Rinne aufgenommen ist. Dies hat den Vorteil, dass innen an der Campingfahrzeugduschkabine ablaufendes Wasser besonders zuverlässig in die Rinne abläuft.

Schließlich ist es vorgesehen, dass der zweite umlaufende Rand der Campingfahrzeugduschkabine als steifer Rahmen ausgebildet ist. Hierdurch wird die Campingfahrzeugduschkabine auch in einem oberen Bereich stabilisiert und nimmt mit ihrem Schlauch eine durch die beiden Rahmen vorgegeben Form an.

Die erfindungsgemäße Campingfahrzeugduschkabine ist als flexibler Schlauch ausgebildet und umfasst eine durch einen ersten umlaufenden Rand gebildete untere Öffnung und eine durch einen zweiten umlaufenden Rand gebildete obere Öffnung, wobei der zweite umlaufende Rand der Campingfahrzeugduschkabine erste Befestigungsmittel und zweite Befestigungsmittel umfasst, wobei die Campingfahrzeugduschkabine wahlweise mittels der ersten Befestigungsmittel an einer Decke und/oder wenigstens einer Wand eines Fahrzeuginnenraums eines Campingfahrzeugs befestigtbar ist oder mittels der zweiten Befestigungsmittel an einem Träger wie zum Beispiel einem Ast eines Baumes befestigbar ist. Hierdurch ist die Campingfahrzeugduschkabine sowohl in einem Campingfahrzeug als auch außerhalb eines Campingfahrzeugs einsetzbar, so dass es für den Camper nicht erforderlich ist, zwei Duschkabinen mitzuführen, um an verschiedenen Orten duschen zu können.

Weitere Einzelheiten der Erfindung werden in der Zeichnung anhand von schematisch dargestellten Ausführungsbeispielen beschrieben.

Hierbei zeigt
- Fig. 1: in schematischer Darstellung ausschnittsweise einen Fahrzeuginnenraum eines erfindungsgemäßen Campingfahrzeugs, in welchem eine erfindungsgemäße Campingfahrzeugduschkabine angeordnet ist und
- Fig. 2: in schematischer Darstellung eine Ausführungsvariante einer erfindungsgemäßen Campingfahrzeugduschkabine, welche auch zur Verwendung außerhalb eines Campingfahrzeugs geeignet ist.

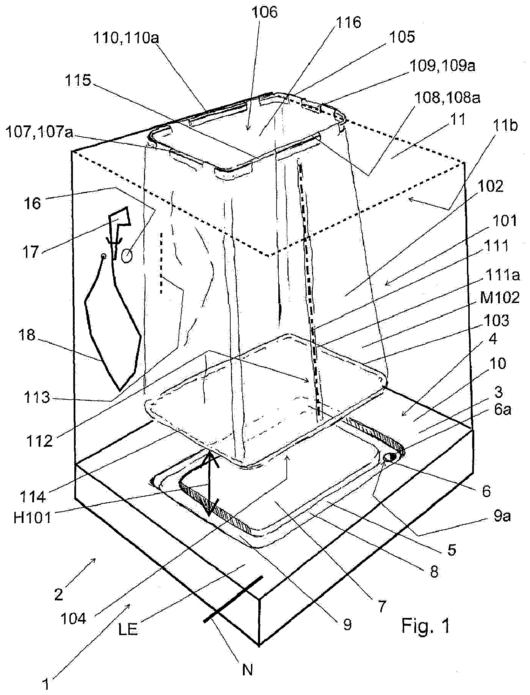

In der Fig.1 ist in schematischer Darstellung ausschnittsweise ein Fahrzeuginnenraum 2 eines erfindungsgemäßen Campingfahrzeugs 1 gezeigt. In dem Campingfahrzeug 1 ist eine erfindungsgemäße Campingfahrzeugduschkabine 101 angeordnet. Das Campingfahrzeug 1 umfasst den ausschnittsweise und schematisch dargestellten Fahrzeuginnenraum 2, wobei der Fahrzeuginnenraum 2 einen Laufboden 3, die Campingfahrzeugduschkabine 101 und eine Ablaufeinrichtung 4 umfasst. Die Ablaufeinrichtung 4 umfasst eine in dem Laufboden 3 ausgebildete Rinne 5 und einen Siphon 6. Die Rinne 5 umläuft einen durch den Laufboden 3 gebildeten Duschboden 7 als Ringrinne 8 ringartig. Außerhalb der Ringrinne 8 bildet der Laufboden einen Umgebungsboden 10. Der Duschboden 7 und der Umgebungsboden 10 liegen auf einem gemeinsamen Niveau N. Ein Ringrinnenboden 9 der Ringrinne 8 liegt unterhalb des Niveaus N. Der Siphon 6 ist derart unter dem Laufboden 3 angeordnet, dass dieser mit seinem Einlauf 6a an eine Öffnung 9a in dem Ringrinnenboden 9 angeschlossen ist. Entsprechend kann Wasser, welches sich in der Ringrinne 8 sammelt über den Siphon 6 in einen nicht dargestellten Abwassertank ablaufen.

Die Campingfahrzeugduschkabine 101 umfasst einen flexiblen Schlauch 102 und eine durch einen ersten umlaufenden Rand 103 gebildete unter Öffnung 104 und eine durch einen zweiten umlaufenden Rand 105 gebildete obere Öffnung 106.

In der Fig. 1 ist die Campingfahrzeugduschkabine 101 um einem Abstand H101 abgehoben von dem Ringrinnenboden 9 dargestellt, damit die Ringrinne 8 besser erkennbar ist. Bei zum Duschen aufgebauter Campingfahrzeugduschkabine 101 ist die Campingfahrzeugduschkabine101 um den Abstand H101 in Richtung der Ringrinne 8 abgesenkt, so dass diese mit dem ersten umlaufenden Rand 103 unter eine durch das Niveau N definierte Laufebene LE des Laufbodens 3 in die Rinne 5 eingetaucht ist.

Der zweite umlaufende Rand 105 der Campingfahrzeugduschkabine 101 umfasst Befestigungsmittel 107, 108, 109, 110. Wenn die Campingfahrzeugduschkabine 101 in der abgesenkten Stellung steht, ist diese mittels der Befestigungsmittel 107, 108, 109, 110 an einer Decke 11 des Fahrzeuginnenraums 2 befestigt. Hierzu sind an einer Unterseite IIb der Decke 11 Klettstreifen 12, 13, 14, 15 angeordnet, welche mit den als Klettstreifen 107a, 108a, 109a, 110a ausgeführten Befestigungsmitteln 107, 108, 109, 110 derart zusammenwirken, dass die Campingfahrzeugduschkabine 101 an der Unterseite 11b der Decke 11 gehalten ist.

Der Schlauch 102 umfasst zwischen dem ersten Rand 103 und dem zweiten Rand 105 an seiner Mantelfläche M102 eine durch einen Verschluss 111 verschließbare Zutrittsöffnung 112. Der Verschluss 111 ist als Reißverschluss 111a ausgebildet.

Weiterhin umfasst der Schlauch 102 zwischen dem ersten Rand 103 und dem zweiten Rand 105 an seiner Mantelfläche M102 einen Durchgriff 113 zur Betätigung einer Armatur 16 und zur Durchführung einer Handbrause 17, welche über einen Anschlussschlauch 18 an eine nicht dargestellte Wasserversorgung des Campingfahrzeugs 1 angeschlossen ist. Hierdurch ist es einer Person, welche sich in einem Innenraum 116 der Campingfahrzeugduschkabine 101 befindet, möglich die Armatur 16 direkt zu betätigen und die Handbrause 17 in den Innenraum 116 zu holen.

Der erste umlaufende Rand 103 der Campingfahrzeugduschkabine 101 ist als steifer Rahmen 114 ausgebildet und der zweite umlaufende Rand 105 der Campingfahrzeugduschkabine ist ebenfalls als steifer Rahmen 115 ausgebildet.

Die Rinne 5 und der erste umlaufende Rand 103 der Campingfahrzeugduschkabine 101 mit seinem Rahmen 114 sind derart in Dimension und Form aufeinander angepasst, dass die Campingfahrzeugduschkabine 101 mit ihrem unteren Rand 113 in der Rinne 5 aufgenommen ist.

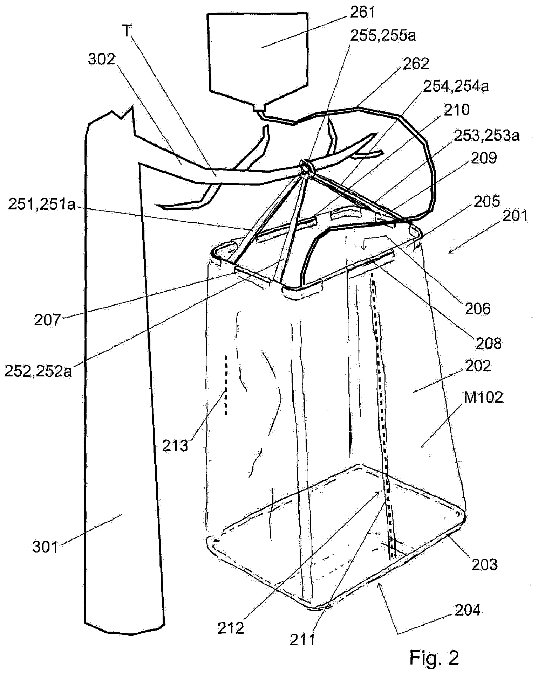

In der Fig. 2 ist eine Ausführungsvariante zu der in der Fig. 1 gezeigten Campingfahrzeugduschkabine gezeigt. Eine in der Fig. 2 gezeigte Campingfahrzeugduschkabine 201 ist ebenfalls als flexibler Schlauch 202 ausgebildet und umfasst ebenfalls eine durch einen ersten umlaufenden Rand 203 gebildete unter Öffnung 204 und eine durch zweiten umlaufenden Rand 205 gebildete obere Öffnung 206.

Weiterhin umfasst der zweite umlaufende Rand 205 der Campingfahrzeugduschkabine 201 ebenfalls erste Befestigungsmittel 207 - 210 und zusätzlich zweite Befestigungsmittel 251 - 255. Entsprechend kann die in der Figur 2 gezeigte Campingfahrzeugduschkabine 201 wahlweise entweder mittels der ersten Befestigungsmittel 207 - 210, vergleichbar zu der in der Figur 1 gezeigten Campingfahrzeugduschkabine an einer Decke eines Fahrzeuginnenraums eines Campingfahrzeugs befestigt werden oder mittels der zweiten Befestigungsmittel 251 - 255, welche durch Gurte 251a - 254a und einen Karabiner 255a gebildet sind, an einem Ast 302 eines Baums 301 befestigt werden, welcher als Träger T dient. Eine Wasserversorgung der Campingfahrzeugduschkabine 201 erfolgt zum Beispiel über einen schematisch dargestellten Wasserbehälter 261 und einen daran angeschlossenen Anschlussschlauch 262. Die Campingfahrzeugduschkabine 201 weist an ihrer Mantelfläche M202 ebenso wie die in der Figur 1 gezeigte Campingfahrzeugduschkabine eine Zutrittsöffnung 212 mit einem Verschluss 111 sowie einen Durchgriff 213 auf.

## Patentansprüche

1. Campingfahrzeug umfassend einen Fahrzeuginnenraum(2),
**wobei,**
der Fahrzeuginnenraum (2) einen Laufboden (3), eine Campingfahrzeugduschkabine (101; 201) und eine Ablaufeinrichtung (4) umfasst, **dadurch gekennzeichnet, dass** die Ablaufeinrichtung (4) eine in dem Laufboden (3) ausgebildete Rinne (5) und einen Siphon (6) umfasst, wobei die Rinne (5) einen durch den Laufboden (3) gebildeten Duschboden (7) als Ringrinne (8) ringartig umläuft.

2. Campingfahrzeug nach Anspruch 1,
**dadurch gekennzeichnet,**
**dass** die Campingfahrzeugduschkabine (101; 201) einen flexiblen Schlauch (102; 202) umfasst und eine durch einen ersten umlaufenden Rand (103; 203) gebildete untere Öffnung (104; 204) und eine durch einen zweiten umlaufenden Rand (105; 205) gebildete obere Öffnung (106; 206) umfasst.

3. Campingfahrzeug nach Anspruch 2,
**dadurch gekennzeichnet,**
**dass** die Campingfahrzeugduschkabine (101; 201) derart angeordnet ist, dass diese mit dem ersten umlaufenden Rand (103; 203) unter eine Laufebene (LE) des Laufbodens (3) in die Rinne (5) eintaucht.

4. Campingfahrzeug nach wenigstens einem der vorhergehenden Ansprüche,
**dadurch gekennzeichnet,**
**dass** der zweite umlaufende Rand (105; 205) der Campingfahrzeugduschkabine (101; 201) wenigstens ein Befestigungsmittel (107 - 110; 207 - 210) umfasst, wobei die Campingfahrzeugduschkabine (101; 201) mittels des Befestigungsmittels (107 - 110; 207 - 210) an einer Decke (11) und/oder wenigstens einer Wand des Fahrzeuginnenraums (2) befestigt ist.

5. Campingfahrzeug nach wenigstens einem der vorhergehenden Ansprüche,
**dadurch gekennzeichnet,**
**dass** der Schlauch (102; 202) zwischen dem ersten Rand (103; 203) und dem zweiten Rand (105; 205) an seiner Mantelfläche (M102; M202) eine durch einen Verschluss (111; 211) verschließbare Zutrittsöffnung (112; 212) umfasst.

6. Campingfahrzeug nach wenigstens einem der vorhergehenden Ansprüche,
**dadurch gekennzeichnet,**
**dass** der Schlauch (102; 202) zwischen dem ersten Rand (103; 203) und dem zweiten Rand (105; 205) an seiner Mantelfläche (M102; M202) einen Durchgriff (113; 213) zur Betätigung einer Armatur (16) und/oder zur Durchführung einer Handbrause (17) umfasst.

7. Campingfahrzeug nach wenigstens einem der vorhergehenden Ansprüche,
**dadurch gekennzeichnet,**
**dass** der erste umlaufende Rand (103; 203) der Campingfahrzeugduschkabine (101; 201) als steifer Rahmen (114) oder als elastisch verformbarer Rahmen ausgebildet ist.

8. Campingfahrzeug nach Anspruch 7,
**dadurch gekennzeichnet,**
**dass** die Rinne (5) und der erste umlaufende Rand (103; 203) der Campingfahrzeugduschkabine (101; 201) mit seinem Rahmen (114) derart in Dimension und Form aufeinander angepasst sind, dass die Campingfahrzeugduschkabine (101; 201) mit ihrem unteren Rand (103; 203) in der Rinne (5) aufgenommen ist.

9. Campingfahrzeug nach wenigstens einem der vorhergehenden Ansprüche,
**dadurch gekennzeichnet,**
**dass** der zweite umlaufende 30 Rand (105; 205) der Campingfahrzeugduschkabine (101; 201) als steifer Rahmen (115) ausgebildet ist.

10. Campingfahrzeugduschkabine (201),
**dadurch gekennzeichnet,**
**dass** die Campingfahrzeugduschkabine (201) als flexibler Schlauch (202) ausgebildet ist und eine durch einen ersten umlaufenden Rand (203) gebildete untere Öffnung (204) und eine durch zweiten 5 umlaufenden Rand (205) gebildete obere Öffnung (206) umfasst, wobei der zweite umlaufende Rand (205) der Campingfahrzeugduschkabine (201) erste Befestigungsmittel (207 - 210) und zweite Befestigungsmittel (251 - 255) umfasst, wobei die Campingfahrzeugduschkabine (201) wahlweise mittels der 10 ersten Befestigungsmittel (207 - 210) an einer Decke (11) und/oder wenigstens einer Wand eines Fahrzeuginnenraums (2) eines Campingfahrzeugs (1) befestigbar ist oder mittels der zweiten Befestigungsmittel (251 - 255) an einem Träger (T) wie zum Beispiel einem Ast (302) eines Baumes (301) befestigbar ist,
